# FASCICULE DE BREVET EUROPEEN

(11) **EP 0 513 462 B1**
(45) Date de publication et mention de la délivrance du brevet: **15.02.1995**
(21) Numéro de dépôt: 91440039.5
(22) Date de dépôt: 16.05.1991
(51) Int. Cl.: A23G 3/00, A23G 3/02

(54) **Procédé de fabrication d'une crème de nougat**
Verfahren zur Herstellung von Nougatcreme
Process for making a nougat cream

(43) Date de publication de la demande: 19.11.1992
(73) Titulaire: NOUGAT CHABERT ET GUILLOT, F-26202 Montélimar (FR)
(72) Inventeur: Roelens, François, F-26200 Montelimar (FR); Chabert, Didier, F-26200 Montelimar (FR)
(74) Mandataire: Ropital-Bonvarlet, Claude

(56) Documents cités:
- DE-A- 2 931 669
- FR-A- 782 630
- FR-A- 2 034 237
- CONFECTIONERY PRODUCTION, vol. 53, no. 9, Septembre 1987,SURBITON GB pages 670 - 672; SWEETMAKER: 'Selection of Nut and Cream Pastes: Part 4 - Nougat - With or Without Honey'

## Description

La présente invention a pour objet le procédé de fabrication d'une crème de nougat de Montélimar présentant toutes les qualités organoleptiques attachées à ce type de produit.

On sait que le nougat, qui se répartit en deux catégories, nougat dur et nougat tendre, est un produit de confiserie composé d'une pâte de base, généralement aérée, dans laquelle est incorporée une garniture constituée le plus souvent de fruits secs et/ou de fruits confits.

On sait aussi que la dénomination "Nougat de Montélimar" est réservée à un nougat répondant à des normes de définition rigoureuses et dont :
- la pâte est aérée uniquement au moyen d'albumine d'oeuf et/ou de blanc d'oeuf de poule ;
- la garniture, qui représente au moins 30 % en poids du produit fini, est exclusivement composée d'amandes douces d'amandier émondées et grillées, et éventuellement de pistaches ;
- les matières sucrantes renferment au moins 25 % en poids de miel, à l'exclusion de tout renforçateur d'arôme de miel.

Depuis longtemps, d'autre part, les fabricants de nougat dur essaient de recycler leurs chutes de fabrication en les vendant à des artisans ou à des industriels qui les incorporent dans leurs productions, notamment dans des glaces.

Toutefois ces morceaux de nougat grossièrement cassés sont très hygroscopiques et sous l'effet de l'humidité atmosphérique ils deviennent collants.

On a donc tenté d'utiliser ces brisures de nougat pour fabriquer une crème de nougat, en les broyant très finement avec des amandes ou des noisettes, de manière à obtenir un produit pâteux. Toutefois le produit ainsi obtenu ne possède pas des qualités organoleptiques satisfaisantes, présentant une note exagérément forte en amandes ou en noisettes, qui couvre totalement la note miel, laquelle fait partie intégrante du nougat dit de Montélimar.

D'autre part la fabrication d'une crème de Nougat de Montélimar se heurte à cette difficulté que l'appellation qui s'y trouve attachée entraîne l'exigence, pour le produit, de renfermer au moins 25 % en poids de miel par rapport aux matières sucrantes, ce qui le rend encore plus hygroscopique et de ce fait impossible à broyer sans qu'il y ait recollage immédiat des morceaux. Il s'ensuit qu'à ce jour il est radicalement impossible de fabriquer une crème de Nougat de Montélimar.

La présente invention a pour but d'offrir une solution au problème ainsi posé en proposant un procédé qui autorise la fabrication d'une crème de Nougat de Montélimar dans des conditions de mise en oeuvre relativement simples, faisant appel à un matériel existant.

Le procédé selon l'invention se caractérise essentiellement en ce qu'il associe à une succession d'opérations bien déterminées la mise en oeuvre d'un appareillage nécessaire à la bonne conduite desdites opérations.

Selon une première caractéristique du procédé selon l'invention, ce procédé consiste en la succession d'opérations ci-après :
a) fabrication d'un nougat dur renfermant au moins 30 % d'amandes blanchies torréfiées, et environ 68 % de matières sucrantes, dont 8 à 16 % de miel par rapport auxdites matières sucrantes, soit 1/3 à 2/3 de la quantité totale de miel mise en oeuvre ;
b) broyage du nougat dur
c) fabrication d'une pâte de nougat par incorporation au nougat dur en grains, dans un broyeur-mélangeur, d'une quantité d'amandes blanchies torréfiées égale à environ 30 à 60 % en poids de la quantité de nougat en grains mise en oeuvre, jusqu'à obtention d'une granulométrie inférieure à 100 ».
d) incorporation à la pâte ainsi obtenue du reste du miel, soit 2/3 à 1/3 de la quantité totale de miel mise en oeuvre, sous forme de miel déshydraté présentant l'aspect d'une poudre cristalline sèche, de manière que la proportion de miel dans la crème de nougat soit au moins égale à 25 % de ses matières sucrantes.

Selon une seconde caractéristique du procédé selon l'invention, le broyeur-mélangeur mis en oeuvre dans la troisième étape consiste en un broyeur-mélangeur du type couramment utilisé pour le broyage de fruits secs et présentant l'avantage de réaliser dans un même tambour les trois opérations de broyage, mélangeage et affinage des ingrédients.

La première étape du procédé selon l'invention peut être réalisée de manière traditionnelle, les sucres mis en oeuvre l'étant de préférence sous forme d'un mélange de sirop de glucose et de saccharose.

Le nougat dur obtenu à cette étape du procédé selon l'invention renferme seulement 8 à 16 % en poids de miel par rapport aux matières sucrantes, et ne constitue donc pas un nougat de Montélimar.

Conformément à l'invention, la deuxième étape du procédé qui en fait l'objet est réalisée dans tout broyeur de type connu approprié à cette utilisation, mais de préférence dans un broyeur à lames dont la grille perforée laisse passer les grains de nougat de granulométrie satisfaisante.

Toujours conformément à l'invention, et ainsi qu'il a déjà été dit, la troisième étape du procédé s'effectue dans un broyeur-mélangeur pour fruits secs et selon la succession d'opérations ci-après :
- introduction des amandes dans le broyeur-mélangeur ;
- mise en rotation du broyeur-mélangeur pendant une heure environ afin de faire sortir l'essentiel de l'huile des amandes.
- introduction progressive du nougat broyé.
- maintien en rotation du broyeur-mélangeur jusqu'à obtention d'une granulométrie inférieure à 100 », contrôlée au micromètre.

A l'issue de cette étape on obtient une pâte de nougat dont le goût est très fort en amandes mais peu en miel.

La quatrième étape du procédé selon l'invention permet d'obtenir une crème de nougat de Montélimar répondant aux normes requises par cette dénomination.

Cette quatrième étape peut s'effectuer dans le broyeur-mélangeur mis en oeuvre dans l'étape précédente, par incorporation à la pâte de nougat de miel déshydraté.

Le miel déshydraté mis en oeuvre dans cette étape du procédé selon l'invention est de préférence un miel déshydraté obtenu à partir d'un miel mélangé à une quantité suffisante de maltodextrine pour conduire à l'obtention sur extrait sec de 60% de matières issues du miel, le mélange étant déshydraté jusqu'à obtention d'une poudre cristalline et sèche.

La crème de nougat obtenue à l'issue de cette dernière étape correspond aux normes requises pour la dénomination "Nougat de Montélimar", car renfermant au moins 25% de miel par rapport aux matières sucrantes, et renfermant d'autre part plus de 30 % d'amandes.

Le procédé qui vient d'être décrit peut bien entendu être adapté à la fabrication d'une crème de nougat d'un autre type, par exemple par incorporation au nougat en grains, à la troisième étape du procédé, de beurre de cacao ou d'une autre graisse à haut point de fusion.

L'exemple qui suit est fourni à titre de simple illustration de la présente invention, étant bien entendu qu'il ne présente vis à vis d'elle aucun caractère limitatif.

### EXEMPLE

### 1ère étape : fabrication du nougat dur

Pour obtenir un lot de 136 kg de nougat dur on met en oeuvre les ingrédients ci-après :
- 104 kg de "MIXUC 75 G 51", sirop à 75 degrés Brix composé à 51 % de sirop de glucose et à 49 % de saccharose, commercialisé par la Compagnie Générale Sucrière et renfermant 78 kg de matières sucrantes.
- 14 kg de miel de degré Brix 82-83.
- 0,7 kg d'albumine de blanc d'oeuf de poule.
- 50 g d'extrait pur de vanille ou autres extraits
- 40,8 kg d'amandes blanchies torréfiées, et on procède à la succession d'opérations ci-après :
- cuisson du MIXUC avec 10 kg de miel à une température de 124° C à 136° C
- battage lent de l'albumine avec 4 kg de miel dilué dans 1,6 kg d'eau, en ajoutant la vanille.
- mise sous vide des sirops dès la fin de la cuisson jusqu'à diminuer leur température aux environs de 126° C à 106° C.
- écoulement du sirop cuit sur les blancs d'oeufs en battant toujours lentement.
- mise sous pression d'environ 2 bars du mélange puis battage rapide pendant 1 à 2 minutes pour obtenir une densité de l'ordre de 0,9 kg/l.
- extrusion de la pâte ainsi obtenue dans un mélangeur à vis et mélangeage avec les amandes.
- laminage à chaud du mélange en vue de l'obtention de plaques de nougat qu'on laisse refroidir.

### 2ème étape : broyage du nougat

Les plaques de nougat dur obtenues à l'étape précédente sont broyées dans un broyeur à lames de type connu utilisé dans de nombreuses industries, notamment pour le traitement des déchets de matières plastiques.

### 3ème étape : fabrication de la pâte de nougat

On procède à cette étape en mettant en oeuvre, pour 600 kg de pâte :
- 200 kg d'amandes blanchies torréfiées
- 400 kg de nougat en grains provenant de l'étape précédente.

Le matériel utilisé consiste en un broyeur-mélangeur pour fruits secs, la procédure suivie étant la suivante :
- introduction des amandes
- mise en rotation du broyeur pendant une heure environ afin de faire sortir l'essentiel de l'huile des amandes.
- introduction progressive du nougat
- maintien en rotation du broyeur jusqu'à obtention d'une granulométrie inférieure à 100 » (mesurée au micromètre)
On obtient ainsi une pâte de nougat dont le goût est très fort en amandes mais peu en miel.

### 4ème étape : obtention de la crème de nougat

On incorpore à la pâte obtenue à l'étape précédente, toujours dans le broyeur-mélangeur, 60 kg de miel déshydraté sous forme d'une poudre cristalline obtenue à partir d'un miel mélangé à une quantité suffisante de maltodextrine pour conduire à l'obtention sur extrait sec de 60 % de matières issues du miel, en maintenant le broyeur-mélangeur en rotation pendant environ une heure après addition du miel déshydraté.

On obtient ainsi une crème de Nougat de Montélimar répondant aux normes de dénomination requises. En effet la proportion de miel contenue dans cette crème peut être aisément calculée à partir des données chiffrées ci-dessus : les 400 kg de nougat broyé mis en oeuvre renferment 270,6 kg de matières sucrantes dont 40,6 kg de miel auxquels s'ajoutent les 60 kg de miel déshydraté, lesquels renferment, compte tenu de ce que le miel mis en oeuvre est à 82 degrés Brix, 44 kg de miel, soit au total 84,6 kg de miel pour 330,6 kg de matières sucrantes, ce qui équivaut à une teneur en miel de 25,5 % par rapport aux matières sucrantes.

D'autre part la teneur en amandes de la crème de nougat est celle du nougat dur, soit 120 kg pour 400 kg, augmentée des 200 kg ajoutés à la troisième étape, soit en tout 320 kg pour 660 kg de crème de nougat, ce qui équivaut à une teneur en amandes de 48 %.

La crème de nougat de Montélimar obtenue selon ce procédé présente par ailleurs des qualités organoleptiques tout à fait satisfaisantes et attrayantes.

Il va de soi que la portée de la présente invention ne saurait être limitée à la description qui précède d'un de ses modes de réalisation, susceptible de subir un certain nombre de modifications sans pour autant sortir du cadre de l'invention telle qu'elle se trouve définie dans les revendications. Notamment la description ci-dessus, dirigée sur la fabrication d'une crème de nougat de Montélimar, peut être adaptée à la fabrication d'autres crèmes de nougat.

## Revendications

1. Procédé de fabrication d'une crème de nougat renfermant au moins 30 % en poids d'amandes douces émondées et dont les matières sucrantes renferment au moins 25 % en poids de miel, caractérisé en ce qu'il comporte les différentes étapes ci-après :
a) fabrication d'un nougat dur renfermant environ 30 % en poids d'amandes blanchies torréfiées et environ 68 % en poids de matières sucrantes dont 8 à 16 % en poids de miel par rapport auxdites matières sucrantes, soit 1/3 à 2/3 de la quantité totale de miel mise en oeuvre ;
b) broyage dudit nougat dur ;
c)fabrication d'une pâte de nougat par incorporation, au nougat dur broyé, dans un broyeur-mélangeur, d'une quantité d'amandes blanchies torréfiées égale à 30 à 60 % en poids de la quantité de nougat broyé mise en oeuvre, jusqu'à obtention d'une granulométrie inférieure à 100 » ;
d) incorporation à ladite pâte de nougat du reste du miel, soit 2/3 à 1/3 de la quantité totale mise en oeuvre, sous forme de miel déshydraté.

2. Procédé selon la revendication 1, caractérisé en ce que l'étape a) est réalisée de manière traditionnelle, les sucres mis en oeuvre l'étant sous forme d'un mélange de sirop de glucose et de saccharose.

3. Procédé selon la revendication 2, caractérisé en ce que le sirop de sucres est un sirop à 75 degrés Brix renfermant 51 % en poids de sirop de glucose et 49 % en poids de saccharose.

4. Procédé selon la revendication 1, caractérisé en ce que l'étape b) de broyage du nougat dur est effectuée dans un broyeur à lames.

5. Procédé selon la revendication 1, caractérisé en ce que l'étape c) de fabrication de la pâte de nougat s'effectue dans un broyeur-mélangeur du type utilisé pour le broyage de fruits secs, permettant de réaliser dans un même tambour les trois opérations de broyage, mélangeage et affinage des ingrédients.

6. Procédé selon la revendication 5, caractérisé en ce que l'étape c) est réalisée en effectuant la succession d'opérations suivantes :
- introduction des amandes dans le broyeur-mélangeur ;
- mise en rotation du broyeur-mélangeur pendant une heure environ ;
- introduction progressive du nougat broyé ;
- maintien en rotation du broyeur-mélangeur jusqu'à obtention d'une granulométrie inférieure à 100 ».

7. Procédé selon la revendication 1, caractérisé en ce que l'étape d) d'obtention de la crème de nougat s'effectue par incorporation à la pâte de nougat issue de l'étape c) d'un miel déshydraté obtenu à partir d'un miel mélangé à une quantité suffisante de maltodextrine pour conduire à l'obtention sur extrait sec de 60 % de matières issues du miel, le mélange étant déshydraté jusqu'à obtention d'une poudre cristalline et sèche.

## Claims

1. Process for the making of a nougat cream containing at least 30% by weight of soft trimmed almonds and whose sweetening material comprises at least 25% by weight honey characterised in that it comprises the following different stages:
a) Making of a hard nougat containing approximately 30% by weight of roasted blanched almonds and approximately 68% by weight of sweetening material of which 8 to 16% by weight is of honey with respect to the said sweetening materials that is to say, 1/3 to 2/3 of the total quantity of honey used;
b) Grinding of said hard nougat;
c) Making of a nougat paste by mixing into the ground hard nougat, in a grinder mixer, a quantity of roasted blanched almonds equal to 30 to 60% by weight of the quantity of ground nougat used until a granulation lower than 100 microns is obtained;
d) Mixing into said nougat paste of the rest of the honey, that is to say, 2/3 to 1/3 of the total quantity used, in the form of dehydrated honey.

2. Process according to claim 1 characterised in that the stage (a) is carried out in the usual way, the sugars used being in the form of a mixture of syrup of glucose and saccharose.

3. Process according to claim 2 characterised in that the syrup of sugars is a 75 degree Brix syrup containing 51% by weight glucose syrup and 49% by weight saccharose.

4. Process according to claim 1 characterised in that the stage (b) of grinding of the hard nougat is carried out in a bladed grinder.

5. Process according to claim 1 characterised in that the stage (c) of making the nougat paste takes place in a grinder mixer of the type utilised for the grinding of dry fruits, allowing the taking place in the same drum of the three operations of grinding, mixing and refining of the ingredients.

6. Process according to claim 5 characterised in that stage (c) takes place whilst carrying out the following sequence of operations:
- introduction of almonds into the grinder mixer;
- rotation of the grinder mixer for approximately one hour;
- progressive introduction of the ground nougat;
- maintenance of the rotation of the grinder-mixer until granulation smaller than 100 microns is obtained.

7. Process according to claim 1 characterised in that stage (d) of obtaining the nougat cream takes place by mixing into the nougat paste coming from stage (c) dehydrated honey obtained from a honey mix with a sufficient quantity of maltodextrine to lead to the obtaining on dry extract of 60% of the material coming from the honey, the mixture being dehydrated until a crystalline and dry powder is obtained.

## Patentansprüche

1. Verfahren zur Herstellung einer Nougatcreme, welche mindestens 30 Gew.-% geputzte süße Mandeln und deren Zuckermassen mindestens 25 Gew.-% Honig enthalten, gekennzeichnet durch die verschiedenen nachfolgenden Schritte:
(a) Herstellen von Hartnougat, der ungefähr 30 Gew.-% blanchierte geröstete Mandeln und ungefähr 68 Gew.-% Zuckermassen enthält, bei denen 8 bis 16 Gew.-% des Honigs, bezogen auf diese Zuckermassen, 1/3 bis 2/3 der verwendeten Gesamtmenge des Honigs ist;
(b) Zermahlen dieses Hartnougats;
(c) Herstellen einer Nougatpaste durch Einbringen einer Menge blanchierter gerösteter Mandeln von gleich 30 bis 60 Gew.-% der verwendeten Menge des zermahlenen Nougats in den zermahlenen Nougat in einer Mischmühle, bis eine Korngröße unter 100 » erhalten wird;
(d) Einbringen des restlichen Honigs in diese Nougatpaste in Form von dehydriertem Honig, der 2/3 bis 1/3 der Gesamtmenge des verwendeten Honigs ist.

2. Verfahren nach Anspruch 1, **dadurch gekennzeichnet**, daß der Schritt (a) auf traditionelle Weise ausgeführt wird, wobei der verwendete Zucker in Form einer Mischung aus Glucosesirup und Saccharose vorliegt.

3. Verfahren nach Anspruch 2, **dadurch gekennzeichnet**, daß der Zuckersirup ein Sirup mit 75° Brix ist und 51 Gew.-% Glucosesirup und 49 Gew.-% Saccharose enthält.

4. Verfahren nach Anspruch 1, **dadurch gekennzeichnet**, daß der Schritt (b) des Zermahlens des Hartnougats in einer Klingenmühle ausgeführt wird.

5. Verfahren nach Anspruch 1, **dadurch gekennzeichnet**, daß der Schritt (c) des Herstellens der Nougatpaste in einer Mischmühle des Typs ausgeführt wird, wie sie zum Zermahlen von getrockneten Früchten verwendet wird, die in der gleichen Trommel die Verwirklichung der drei Arbeitsschritte des Zermahlens, des Mischens und des Affinierens der Bestandteile ermöglicht.

6. Verfahren nach Anspruch 5, **dadurch gekennzeichnet**, daß der Schritt (c) durch das Ausführen der Folge der nachfolgenden Operationen verwirklicht wird:
Einbringen der Mandeln in die Mischmühle;
Drehen der Mischmühle während ungefähr einer Stunde;
Fortschreitendes Einbringen des zermahlenen Nougats;
Aufrechterhalten der Drehung der Mischmühle, bis eine Korngröße unter 100» erhalten wird.

7. Verfahren nach Anspruch 1, **dadurch gekennzeichnet**, daß der Schritt (d) des Erlangens der Nougatcreme bewirkt wird durch Einbringen in die bei Schritt (c) erhaltenen Nougatpaste von dehydriertem Honig, der erhalten wurde aus einem Honig, gemischt mit einer ausreichenden Menge von Maltodextrin, um bei der Herstellung des trockenen Extrakts 60 % der eingesetzten Honigmassen zu erhalten, wobei die Mischung dehydriert wurde bis ein kristallines und trockenes Pulver erhalten wurde.
